(19) Europäisches Patentamt / European Patent Office / Office européen des brevets

(11) **EP 4 103 364 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **21709345.9**

(22) Anmeldetag: **10.02.2021**

(51) Internationale Patentklassifikation (IPC):
**B25J 9/16** (2006.01)        **G05B 19/409** (2006.01)

(52) Gemeinsame Patentklassifikation (CPC):
**B25J 9/1656; G05B 19/409;** G05B 2219/35507;
G05B 2219/39438

(86) Internationale Anmeldenummer:
**PCT/EP2021/053134**

(87) Internationale Veröffentlichungsnummer:
**WO 2021/160638 (19.08.2021 Gazette 2021/33)**

(54) **GRAPHISCH UNTERSTÜTZTE ANPASSUNG VON ROBOTER-STEUERPROGRAMMEN**

GRAPHICALLY SUPPORTED ADAPTATION OF ROBOT CONTROL PROGRAMS

ADAPTATION À ASSISTANCE GRAPHIQUE DE PROGRAMMES DE COMMANDE ROBOTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2020   DE 102020103853**

(43) Veröffentlichungstag der Anmeldung:
**21.12.2022   Patentblatt 2022/51**

(73) Patentinhaber: **Franka Emika GmbH**
**80797 München (DE)**

(72) Erfinder:
• **MEDINA HERNANDEZ, Jose Ramon**
**81543 München (DE)**
• **SPENNINGER, Andreas**
**85757 Karlsfeld (DE)**

(74) Vertreter: **Novagraaf Group**
**Chemin de l'Echo 3**
**1213 Onex (CH)**

(56) Entgegenhaltungen:
• SHAIKH MEHER T ET AL: "Design and Evaluation of Adverb Palette: A GUI for Selecting Tradeoffs in Multi-Objective Optimization Problems", 2017 12TH ACM/IEEE INTERNATIONAL CONFERENCE ON HUMAN-ROBOT INTERACTION (HRI, ACM, 6. März 2017 (2017-03-06), Seiten 389-397, XP033447158, [gefunden am 2018-11-13]
• ELLIS RATNER ET AL: "Simplifying Reward Design through Divide-and-Conquer", ARXIV.ORG, CORNELL UNIVERSITY LIBRARY, 201 OLIN LIBRARY CORNELL UNIVERSITY ITHACA, NY 14853, 7. Juni 2018 (2018-06-07), XP080888010,
• EHRICKE H-H ET AL: "THE VISION CAMERA: AN INTERACTIVE TOOL FOR VOLUME DATA EXPLORATION AND NAVIGATION", PROCEEDINGS OF THE CONFERENCE ON VISUALIZATION. SAN JOSE, OCT. 25 - 29, 1993; [PROCEEDINGS OF THE CONFERENCE ON VISUALIZATION], NEW YORK, IEEE, US, Bd. -, 25. Oktober 1993 (1993-10-25), Seiten 25-30, XP000475407, ISBN: 978-0-8186-3942-5
• SHAIKH MEHER T ET AL: "Interactive multi-objective path planning through a palette-based user interface", PROCEEDINGS OF SPIE; [PROCEEDINGS OF SPIE ISSN 0277-786X VOLUME 10524], SPIE, US, Bd. 9837, 13. Mai 2016 (2016-05-13), Seiten 98370K-98370K, XP060070305, DOI: 10.1117/12.2224111 ISBN: 978-1-5106-1533-5
• PASHKEVICH A P ET AL: "Computer-aided programming of robotic manufacturing cells for laser cutting applications", EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, 15. Oktober 2001 (2001-10-15), Seiten 603-612, XP010589021, ISBN: 978-0-7803-7241-2

**Beschreibung**

Die Erfindung betrifft eine Steuereinheit für einen Robotermanipulator zum Ermitteln eines oder mehrerer Parameter eines Steuerprogramms und/oder einer Regelung für einen Robotermanipulator sowie ein Verfahren zum Ermitteln eines oder mehrerer Parameter eines Steuerprogramms und/oder einer Regelung für einen Robotermanipulator.

Die Veröffentlichung SHAIKH MEHER T ET AL: "Design and Evaluation of Adverb Palette: A GUI for Selecting Tradeoffs in Multi-Objective Optimization Problems", 12TH ACM/IEEE INTERNATIONAL CONFERENCE ON HUMAN-ROBOT INTERACTION (HRI), ACM, 6 March 2017, Seiten 389 - 397, XP033447158, offenbart eine Steuereinheit für einen Robotermanipulator aufweisend eine interaktive Bedieneinheit, wobei mittels Schiebereglern Gewichtungen für eine vorgegebene Kostenfunktion ausgewählt werden.

Aufgabe der Erfindung ist es, das Anpassen einer Regelung oder eines Steuerprogramms für einen Robotermanipulator zu vereinfachen.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Steuereinheit für einen Robotermanipulator, aufweisend eine interaktive Bedieneinheit, wobei die interaktive Bedieneinheit zum Anzeigen eines ersten Verstellelements und eines zweiten Verstellelements und eines vorgegebenen Bereiches für das erste Verstellelement und für das zweite Verstellelement ausgeführt ist, wobei das erste Verstellelement und das zweite Verstellelement innerhalb des Bereiches durch eine Eingabe eines Anwenders an der interaktiven Bedieneinheit verschiebbar sind, wobei die interaktive Bedieneinheit zum Erfassen einer vom Anwender vorgegebenen Stellung der ersten Verstellelements und des zweiten Verstellelements innerhalb des vorgegebenen Bereichs und zum Übermitteln der Stellung des ersten Verstellelements und des zweiten Verstellelements an eine Recheneinheit der Steuereinheit ausgeführt ist, wobei das erste Verstellelement und das zweite Verstellelement auf einer gemeinsamen linearen Skala verschiebbar sind, wobei die Recheneinheit dazu ausgeführt ist, abhängig von der relativen Stellung des ersten Verstellelements zum zweiten Verstellelement und abhängig von der relativen Stellung des jeweiligen Verstellelements relativ zum Bereich zumindest drei Gewichtungen für eine vorgegebene Kostenfunktion zu ermitteln, wobei die Summe der Gewichtungen für alle Stellungen des ersten Verstellelements konstant ist, und wobei die Recheneinheit dazu ausgeführt ist, auf Basis der Kostenfunktion mit den ermittelten Gewichtungen einen oder mehrere Parameter eines Steuerprogramms und/oder einer Regelung für den Robotermanipulator zu ermitteln.

Insbesondere ist die Recheneinheit dazu ausgeführt, das angepasste Steuerprogramm mit der insbesondere angepassten Regelung des Robotermanipulators zum Ausführen einer vorgegebenen Aufgabe auszuführen.

Bevorzugt ist die Steuereinheit am Robotermanipulator selbst angeordnet, das heißt die Steuereinheit ist bevorzugt eine Steuereinheit des Robotermanipulators. Die Steuereinheit dient insbesondere zum Ausführen von vorgegebenen Steuerprogrammen, wobei die vorgegebenen Steuerprogramme bevorzugt entsprechend anpassbar sind, sodass sie in unterschiedlichen Modi ausgeführt werden können. Beispielsweise kann vom Anwender gewünscht sein, dass ein Steuerprogrammen möglichst schnell ausgeführt wird oder möglichst energiesparend. Insbesondere ist eine Struktur eines Steuerprogramms vorgegeben; die Art, wie das Steuerprogrammen aber speziell ausgeführt werden kann, ist jedoch vorteilhaft anpassbar. Das Anpassen eines solchen Steuerprogramms entspricht einem Optimierungsproblem, in dem eine Zielfunktion insbesondere zu minimieren ist, oder zu maximieren (je nach Definition des Ziels und Vorzeichendefinition), das heißt im Allgemeinen zu optimieren ist. Die Parameter des Steuerprogramms beziehen sich dabei insbesondere auf vom Regler (das heißt der Regelung) vorzusteuernde Parameter, wie insbesondere eine Geschwindigkeit des Robotermanipulators.

Das Steuerprogramm dient zum Ausführen einer vorgegebenen Aufgabe für den Robotermanipulator und wird mithilfe eines Reglers auf dem Robotermanipulator ausgeführt. Der Regler dient insbesondere zum Vorsteuern bestimmter Größen, wie eine bestimmte gewünschte Geschwindigkeit oder eine gewünschte Beschleunigung, oder auch eine gewünschte Kontaktkraft des Robotermanipulators gegenüber einem Objekt in der Umgebung des Robotermanipulators. Ein solches Vorsteuersignal wird vorteilhaft mit Messwerten verglichen und Stellgrößen des Robotermanipulators entsprechend angesteuert, sodass die tatsächlichen Größen gegen die gewünschten Größen insbesondere des Vorsteuersignals streben. Die hier betrachteten Anteile des Reglers des Robotermanipulators betreffen daher insbesondere die äußeren Schleifen, die die maßgeblichen Größen für die Ausführung einer Aufgabe betreffen. Im Gegensatz dazu dienen insbesondere die inneren Schleifen des Reglers zur Motorsteuerung, das heißt zur entsprechenden Umsetzung der Stellgröße der äußeren Schleife. Auch die Parameter eines solchen Reglers können entsprechend verwendet werden, um die oben genannte Anpassung der Ausführung des Steuerprogramms zu realisieren. Beispielsweise wird die Bandbreite eines dynamischen Filters erhöht oder verringert, sowie die Größe von Rückführverstärkungen oder Verstärkungen im Vorwärtszweig des Reglers angepasst. Insbesondere wird damit die Bandbreite des Reglers der Steuereinheit für den Robotermanipulator angepasst. Dies entspricht einer Aggressivität, wie der Regler des Robotermanipulators die von ihm auszuführende Aufgabe verfolgt, entweder mit schwachen Verstärkungen, sodass der Robotermanipulator nur schwach auf Störungen reagiert, oder mit starken Verstärkungen, sodass der Robotermanipulator sehr schnell und mit hohem Drehmoment an den Motoren des Robotermanipulators reagiert.

Die Parameter des oben genannten Steuerprogramms und/oder die Parameter des Reglers werden daher mithilfe einer Kostenfunktion angepasst. Die Kostenfunktion ist ein Hilfsmittel einer insbesondere nichtlinearen Optimierung, wobei sich die Kostenfunktion typischerweise aus mehreren Komponenten, das heißt Summanden zusammensetzt. Solche Komponenten betreffen Anteile, die die Kostenfunktion alle einzelnen erhöhen. Dabei können diese Anteile unterschiedlich gewichtet werden. Wird beispielsweise ein Kompromiss bei einer Ausführung des Robotermanipulators zwischen Schnelligkeit bei der Ausführung der Aufgabe und gleichzeitig auch der Abnutzung des Robotermanipulators angestrebt, so setzt sich die Kostenfunktion bevorzugt aus der Summe der Quadrate der Zeitdauer und eines Maßes für die Abnutzung zusammen. Wird diese Kostenfunktion minimiert, so ergibt sich insbesondere ein Kompromiss aus benötigter Zeitdauer und Abnutzung des Robotermanipulators. Wird dagegen eine Gewichtung dieser Anteile der Kostenfunktion eingeführt, so kann der Fokus auf eine der beiden dieser sich eigentlich widersprechenden Größen gelegt werden. Wird beispielsweise die benötigte Zeitdauer mit 70 % gewichtet und die Abnutzung des Robotermanipulators mit 30 % gewichtet, so ist die Summe der Gewichtungen 100 %, aber durch die höhere Gewichtung der benötigten Zeitdauer werden bei der Minimierung der Kostenfunktion die Parameter des Steuerprogramms und/oder die Parameter des Reglers tendenziell so angepasst, dass die Ausführung der Aufgabe tendenziell zugunsten der Zeitdauer stattfindet, das heißt, dass die Aufgabe des Robotermanipulators relativ schnell ausgeführt wird, und dafür die Abnutzung am Robotermanipulator eher größer ist.

Damit eine solche Gewichtung, wie oben beispielhaft beschrieben, für einen Anwender möglichst einfach eingestellt werden kann, wird erfindungsgemäß auf der interaktiven Bedieneinheit das erste Verstellelement angezeigt. Die relative Stellung des ersten Verstellelements bezogen auf den vorgegebenen Bereich spiegelt sich dabei in den numerischen Werten einer solchen Gewichtungsverteilung wider. Der Anwender gibt mit seiner Eingabe an der interaktiven Bedieneinheit diese Gewichtung vorteilhaft intuitiv vor. Bevorzugt ist die interaktive Bedieneinheit ein berührungsempfindlichen Bildschirm, auch genannt Touchscreen. Das erste Verstellelement ist dabei insbesondere eine grafische abgeschlossene Einheit, die auf der interaktiven Bedieneinheit angezeigt wird. Ebenfalls wird der vorgegebene Bereich an der interaktiven Bedieneinheit angezeigt, insbesondere die Grenzen des vorgegebenen Bereichs. Damit erhält der Anwender vorteilhaft visuell Anhaltspunkte, wie die aktuelle Stellung des ersten Verstellelements relativ zum vorgegebenen Bereich ist, und zweitens erhält er vorteilhaft unmittelbare Rückmeldung, wenn auf eine Eingabe des Anwenders das erste Verstellelement relativ zum Bereich und innerhalb dessen verschoben wird.

Bevorzugt wird der jeweilige Abstand des ersten Verstellelements zu einem Randpunkt des vorgegebenen Bereichs ebenfalls grafisch gekennzeichnet, insbesondere farblich, durch Anzeigen einer numerischen Wertfunktion, insbesondere den von ihm eingestellten Gewichtungen selbst, oder durch Hell- und Dunkelschattierungen.

Die Recheneinheit ermittelt dabei abhängig von dieser Stellung des ersten Verstellelements relativ zum Bereich die numerischen Werte der Gewichtungen so, dass die Summe der Gewichtungen für alle Stellungen des ersten Verstellelements konstant ist, insbesondere 100 % beträgt oder '1', je nach Formulierung. Das erste Verstellelement ist dementsprechend immer nur innerhalb des vorgegebenen Bereichs durch eine Eingabe des Anwenders verschiebbar, da andernfalls die Summe der Gewichtungen den vorgegebenen konstanten Wert überschreiten würden. Insbesondere spiegelt sich dieser Sachverhalt auch in der grafischen Wiedergabe auf der interaktiven Bedieneinheit wider, sodass das erste Verstellelement durch eine Eingabe des Anwenders an der interaktiven Bedieneinheit nicht über die Grenzen des vorgegebenen Bereichs hinaus verschiebbar ist.

Es ist daher eine vorteilhafte Wirkung der Erfindung, dass der Anwender ein vorgegebenes Steuerprogramm und/oder einen Regler des Robotermanipulators abhängig von seinen Wünschen zur Ausführungsart einer Aufgabe des Robotermanipulators intuitiv und sicher anpassen kann. Das Verwenden der Kostenfunktion mit den einzelnen Gewichtungen, dessen Summe einen konstanten Wert, insbesondere '1' oder 100% nie übersteigt, führt zu einer konsistenten Ausführungsweise und daher auch sicheren Ausführungsweise eines Steuerprogramms zum Ausführen einer Aufgabe für den Robotermanipulator.

Gemäß einer vorteilhaften Ausführungsform ist die Recheneinheit dazu ausgeführt, auf Basis der Kostenfunktion mit den ermittelten Gewichtungen den einen oder mehrere Parameter des Steuerprogramms und/oder der Regelung für den Robotermanipulator durch wiederholt angepasstes und lernendes Ausführen einer Aufgabe zu ermitteln. Gemäß dieser Ausführungsform wird die Kostenfunktion insbesondere dazu verwendet, einen selbstlernenden Algorithmus zum Auslegen von Parametern des Steuerprogramms und/oder der Regelung des Robotermanipulators auszuführen. Hierbei wird insbesondere ein vorgegebenes Steuerprogramm mehrfach wiederholt und durch einen konvergierenden Algorithmus, wie beispielsweise einem gradientenbasierten Verfahren oder einem Evolutionsalgorithmus die Kostenfunktion insbesondere minimiert. Vorteilhaft wird somit die gemäß dem ersten Aspekt der Erfindung ermittelte Kostenfunktion und insbesondere deren Gewichtungen zur effizienten Anpassung von selbstlernenden Algorithmen bezüglich des Steuerprogramms oder der Regelung des Robotermanipulators verwendet.

Gemäß einer weiteren vorteilhaften Ausführungsform ist die Recheneinheit dazu ausgeführt, den einen oder die Parameter des Steuerprogramms und/oder der Regelung für den Robotermanipulator durch Minimierung des Funktionswertes der Kostenfunktion mit den ermittelten Gewichtungen zu ermitteln. Die Kostenfunktion dient insbesondere einer Optimierung. Je nach Definition der verwendeten Größen und der verwendeten Vorzeichen für die verwendeten Gewichtungen ist die Kostenfunktion im Sinne einer Optimierung entweder zu maximieren, oder als Straffunktion zu minimieren. Üblicherweise wird in der nichtlinearen Optimierung die Minimierung der Kostenfunktion angewendet.

Gemäß einer weiteren vorteilhaften Ausführungsform weist die Kostenfunktion mindestens eine der folgenden Variablen auf:

- benötigte Zeit zum Ausführen einer Aufgabe durch den Robotermanipulator,
- benötigter Energieverbrauch zum Ausführen der Aufgabe,
- Abnutzung des Robotermanipulators und/oder eines Werkstücks beim Ausführen der Aufgabe,
- Kräfte und/oder Momente, die zwischen einem Endeffektor des Robotermanipulators und einem Objekt aus der Umgebung des Robotermanipulators wirken,
- Momente, die in den Gelenken des Robotermanipulators beim Ausführen der Aufgabe auftreten,
- Geschwindigkeiten eines Referenzpunktes des Robotermanipulators, die beim Ausführen der Aufgabe auftreten,
- Beschleunigungen des Referenzpunktes des Robotermanipulators, die beim Ausführen der Aufgabe auftreten,
- Geräuschentwicklung, die beim Ausführen der Aufgabe auftritt.

Gemäß einer weiteren vorteilhaften Ausführungsform ist das erste Verstellelement auf einer linearen Skala verschiebbar, wobei die Recheneinheit dazu ausgeführt ist, abhängig von der vorgegebenen Stellung des ersten Verstellelements relativ zum Bereich mindestens zwei Gewichtungen für die vorgegebene Kostenfunktion zu ermitteln. Der vorgegebene Bereich weist gemäß dieser Ausführungsform die Form einer Strecke mit einem Anfangs- und einem Endpunkt auf. Das erste Verstellelement kann hierbei zwischen dem Anfangspunkt und dem Endpunkt der Strecke der linearen Skala durch den Anwender verschoben werden. Durch Verschieben des ersten Verstellelements wird ein Abstand links des ersten Verstellelements zum Anfangspunkt der linearen Skala und gleichzeitig und korrelierend damit ein Abstand rechts des ersten Verstellelements zum Endpunkt der linearen Skala eingestellt. Die beiden Abstände korrelieren naturgemäß miteinander und bilden in der Summe immer die konstante Länge der linearen Skala ab. Dies spiegelt sich auch an den Gewichtungen wider, deren Summe grundsätzlich konstant bleibt, denn der erste Abstand zwischen dem ersten Verstellelement zum Anfangspunkt der linearen Skala korreliert mit einer ersten Gewichtung aus der Kostenfunktion und der zweite Abstand zwischen dem ersten Verstellelement zum Endpunkt der linearen Skala korreliert mit einer zweiten Gewichtung aus der Kostenfunktion. Vorteilhaft lassen sich so für den Anwender intuitiv die Verhältnisse der Gewichtungen innerhalb der Kostenfunktion einstellen.

Gemäß einer weiteren vorteilhaften Ausführungsform umfasst der vorgegebene Bereich eine begrenzte Ebene, wobei das erste Verstellelement in der begrenzten Ebene verschiebbar ist, wobei die Recheneinheit dazu ausgeführt ist, abhängig von der vorgegebenen Stellung des ersten Verstellelements relativ zum Bereich mindestens drei Gewichtungen für die vorgegebene Kostenfunktion zu ermitteln. Durch die Ebene können auch mit nur einem ersten Verstellelement mehr als zwei Gewichtungen, das heißt mehr als das eine Verhältnis zwischen zwei Gewichtungen eingestellt werden. Prinzipiell sind dabei unendlich viele Gewichtungen einstellbar, insbesondere wenn für die begrenzte Ebene ein Vieleck verwendet wird.

Gemäß einer weiteren vorteilhaften Ausführungsform ist die begrenzte Ebene ein Vieleck, wobei jede der Ecken des Vielecks jeweils einer Variablen der vorgegebenen Kostenfunktion zugeordnet ist, wobei ein jeweiliger Abstand des ersten Verstellelements jeweils gegenüber einer Ecke des Vielecks gemäß der vorgegebenen Stellung des ersten Verstellelements das Verhältnis zwischen den jeweiligen Gewichtungen bestimmt. Ein solches Vieleck bietet vorteilhaft eine besondere intuitive Möglichkeit für einen Anwender, die Verhältnisse der Gewichtungen für die Kostenfunktion zu bestimmen.

Gemäß einer weiteren vorteilhaften Ausführungsform ist die interaktive Bedieneinheit zum Anzeigen eines zweiten Verstellelements und des vorgegebenen Bereichs für das erste Verstellelement und das zweite Verstellelement ausgeführt, sodass das erste Verstellelement und das zweite Verstellelement innerhalb des Bereiches durch eine Eingabe eines Anwenders verschiebbar sind, wobei die interaktive Bedieneinheit zum Erfassen einer vom Anwender vorgegebenen Stellung des ersten Verstellelements und des zweiten Verstellelements innerhalb des vorgegebenen Bereichs und zum Übermitteln der jeweiligen Stellung des jeweiligen Verstellelements an die Recheneinheit der Steuereinheit ausgeführt ist, wobei die Recheneinheit dazu ausgeführt ist, abhängig von der vorgegebenen Stellung des jeweiligen Verstellelements relativ zum Bereich mindestens drei Gewichtungen für die vorgegebene Kostenfunktion zu ermitteln. Das erste Verstellelement und das zweite Verstellelement bieten vorteilhaft eine höhere Anzahl von Freiheitsgraden, die Gewichtungen für die Kostenfunktion einzustellen.

Gemäß einer weiteren vorteilhaften Ausführungsform sind das erste Verstellelement und das zweite Verstellelement auf einer gemeinsamen linearen Skala verschiebbar, wobei die Recheneinheit dazu ausgeführt ist, abhängig von der relativen Stellung des ersten Verstellelements zum zweiten Verstellelement und abhängig von der relativen Stellung des jeweiligen Verstellelements relativ zum Bereich zumindest drei Gewichtungen für die vorgegebene Kostenfunktion zu ermitteln. Die drei Gewichtungen korrelieren mit der relativen Stellung der beiden Verstellelemente zueinander, wobei wiederum die Summe der Gewichtungen konstant bleibt. Vorteilhaft bieten die Stellungen der Verstellelemente zueinander auf einer linearen Skala eine sehr intuitive Möglichkeit für den Anwender, die Gewichtungen relativ zueinander zu bestimmen.

Ein weiterer Aspekt der Erfindung betrifft ein Verfahren zum Ermitteln eines oder mehrerer Parameter eines Steuerprogramms und/oder einer Regelung für einen Robotermanipulator durch eine Steuereinheit, aufweisend die Schritte:

- Anzeigen eines ersten Verstellelements und eines zweiten Verstellelements und eines vorgegebenen Bereiches für das erste Verstellelement und für das zweite Verstellelement durch eine interaktive Bedieneinheit, wobei das erste Verstellelement und das zweite Verstellelement innerhalb des Bereiches durch eine Eingabe eines Anwenders an der interaktiven Bedieneinheit verschiebbar sind, wobei das erste Verstellelement und das zweite Verstellelement auf einer gemeinsamen linearen Skala verschiebbar sind,
- Erfassen einer vom Anwender vorgegebenen Stellung des ersten Verstellelements und des zweiten Verstellelements innerhalb des vorgegebenen Bereichs durch die interaktive Bedieneinheit und Übermitteln der Stellung des ersten Verstellelements und des zweiten Verstellelements an eine Recheneinheit der Steuereinheit,
- Ermitteln von zumindest drei Gewichtungen für eine vorgegebene Kostenfunktion durch die Recheneinheit abhängig von der relativen Stellung des ersten Verstellelements zum zweiten Verstellelement und abhängig von der relativen Stellung des jeweiligen Verstellelements relativ zum Bereich, wobei die Summe der Gewichtungen für alle Stellungen des ersten Verstellelements konstant ist, und
- Ermitteln eines oder mehrerer Parameter eines Steuerprogramms und/oder einer Regelung für den Robotermanipulator auf Basis der Kostenfunktion mit den ermittelten Gewichtungen durch die Recheneinheit.

Vorteile und bevorzugte Weiterbildungen des vorgeschlagenen Verfahrens ergeben sich durch eine analoge und sinngemäße Übertragung der im Zusammenhang mit der vorgeschlagenen Steuereinheit gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1     eine Steuereinheit an einem Robotermanipulator gemäß einem Ausführungsbeispiel der Erfindung,

Fig. 2     ein erstes und ein zweites Verstellelement und einen vorgegebenen Bereich gemäß einem weiteren Ausführungsbeispiel der Erfindung,

Fig. 3     ein erstes Verstellelement und einen vorgegebenen Bereich gemäß einem weiteren Ausführungsbeispiel der Erfindung, und

Fig. 4     ein Verfahren zum Ermitteln eines oder mehrerer Parameter eines Steuerprogramms und/oder einer Regelung für einen Robotermanipulator gemäß einem weiteren Ausführungsbeispiel der Erfindung.

Die Darstellungen in den Figuren sind schematisch und nicht maßstäblich.

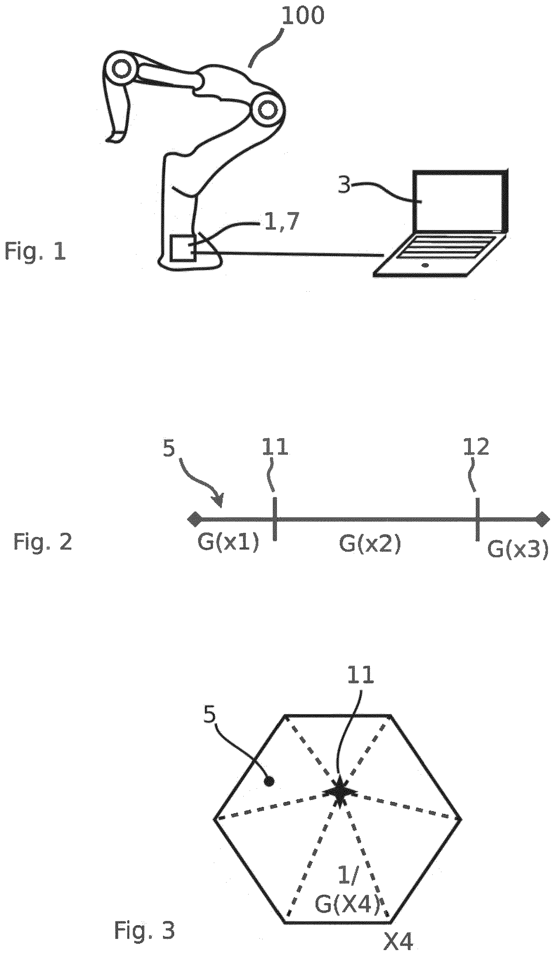

Fig. 1 zeigt eine Steuereinheit 1 eines Robotermanipulators 100. In die Steuereinheit 1 integriert ist eine Recheneinheit 7. Ferner ist eine interaktive Bedieneinheit 3 Teil der Steuereinheit 1, nämlich ein Anwenderrechner mit berührungsempfindlichen Bildschirm. Die interaktive Bedieneinheit 3 ist damit sowohl zum Anzeigen als auch zum Erfassen von Eingaben des Anwenders ausgebildet. Ein erstes Verstellelement 11 bzw. ein erstes Verstellelement 11 und ein zweites Verstellelement 12 werden auf der interaktiven Bedieneinheit 3 angezeigt. Hierzu geben die nachfolgenden Fig. 2 und Fig. 3 Beispiele von entsprechenden Anzeigen an. Die Recheneinheit 7 ermittelt abhängig zumindest von der vorgegebenen Stellung des ersten Verstellelements 11 relativ zum Bereich 5 Gewichtungen für eine vorgegebene Kostenfunktion, wobei die Summe der Gewichtungen für alle Stellungen des jeweiligen Verstellelements 11/12 konstant ist. Ferner ermittelt die Recheneinheit 7 auf Basis der Kostenfunktion mit den ermittelten Gewichtungen einen oder mehrere Parameter eines Steuerprogramms und/oder einer Regelung für den Robotermanipulator 100.

Eine mögliche Kostenfunktion $K(x)$ - abhängig von der Zustandsgröße $x = [x_1, x_2, \ldots, x_n]^T$ wird dabei wie folgt gebildet:

$$K(x) = G(x_1)x_1^2 + G(x_2)x_2^2 + \cdots + G(x_n)x_n^2$$

Hierbei sind $G(x_1)$ die Gewichtung für den ersten Anteil der Kostenfunktion abhängig von der ersten Variablen $x_1$, $G(x_2)$ die Gewichtung für den zweiten Anteil der Kostenfunktion abhängig von der zweiten Variablen $x_2$, usw. Hierbei werden wahlweise mindestens eine der folgenden Variablen verwendet:

- benötigte Zeit zum Ausführen einer Aufgabe durch den Robotermanipulator 100,
- benötigter Energieverbrauch zum Ausführen der Aufgabe,
- Abnutzung des Robotermanipulators 100 beim Ausführen der Aufgabe,
- Kräfte und/oder Momente, die zwischen einem Endeffektor des Robotermanipulators 100 und einem Objekt aus der Umgebung des Robotermanipulators 100 wirken,
- Momente, die in den Gelenken des Robotermanipulators 100 beim Ausführen der Aufgabe auftreten,
- Geschwindigkeiten eines Referenzpunktes des Robotermanipulators 100, die beim Ausführen der Aufgabe auftreten,
- Beschleunigungen des Referenzpunktes des Robotermanipulators 100, die beim Ausführen der Aufgabe auftreten,
- Geräuschentwicklung, die beim Ausführen der Aufgabe auftritt.

Fig. 2 zeigt eine Anzeige der interaktiven Bedieneinheit 3. Ein erstes Verstellelement 11 und ein zweites Verstellelement 12 sind gegeneinander und jeweils gegenüber einem vorgegebenen Bereich 5 verschiebbar. Die Verschiebbarkeit ist innerhalb des Bereiches 5 durch eine Berührung und Wischgeste als Eingabe eines Anwenders an der interaktiven Bedieneinheit 3 möglich. Der vorgegebene Bereich 5 ist dabei eine lineare Skala. Die interaktive Bedieneinheit 3 erfasst eine vom Anwender vorgegebenen Stellung des ersten Verstellelements 11 und des zweiten Verstellelements 12 innerhalb des vorgegebenen Bereichs 5 und übermittelt die jeweilige Stellung an die Recheneinheit 7 der Steuereinheit 1, welche wiederum analog zur Beschreibung der Fig. 1 die Gewichtungen $G(x_1)$, $G(x_2)$ und $G(x_3)$ analog den Abständen zwischen dem ersten Verstellelement 11 und dem zweiten Verstellelement 12 zueinander und zu den Grenzen des linearen Bereichs 5 angibt.

Fig. 3 zeigt eine alternative Anzeige auf der interaktiven Bedieneinheit 3. Hierbei umfasst der vorgegebene Bereich 5 eine begrenzte Ebene, wobei nur ein erstes Verstellelement 11 in der begrenzten Ebene verschiebbar ist. Die Recheneinheit 7 ermittelt wiederum abhängig von der vorgegebenen Stellung des ersten Verstellelements 11 relativ zum Bereich 5 fünf Gewichtungen für die vorgegebene Kostenfunktion, woraus beispielhaft in der Fig. 3 die inverse Gewichtung $G(x_4)$ für die Variable $x_4$ dargestellt ist. Je höher der Abstand des ersten Verstellelements 11 von dem der Variable $x_4$ zugeordneten Randpunkt der als Vieleck ausgebildeten begrenzten Ebene ist, desto kleiner die Gewichtung $G(x_4)$. In der Fig. 3 wird für diesen Zusammenhang daher symbolisch der Abstand mit $1/G(x_4)$ korreliert, ohne dass tatsächlich eine Umkehrfunktione exakt verwendet werden muss. Bevorzugt wird die Summe der Abstände entsprechend den Verhältnissen aufgeteilt. Selbiges gilt für alle anderen Abstände und deren zugehörigen Gewichtungen.

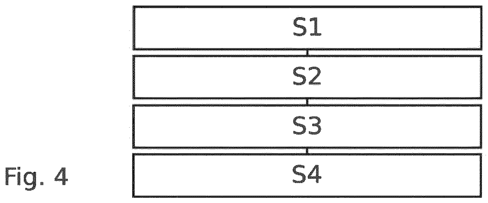

Fig. 4 zeigt ein Verfahren zum Ermitteln eines oder mehrerer Parameter eines Steuerprogramms und/oder einer Regelung für einen Robotermanipulator 100 durch eine Steuereinheit 1, aufweisend die Schritte:

- Anzeigen S1 eines ersten Verstellelements 11 und eines vorgegebenen Bereiches 5 für das erste Verstellelement 11 durch eine interaktive Bedieneinheit 3, wobei das erste Verstellelement 11 innerhalb des Bereiches 5 durch eine Eingabe eines Anwenders an der interaktiven Bedieneinheit 3 verschiebbar ist,
- Erfassen S2 einer vom Anwender vorgegebenen Stellung der ersten Verstellelements 11 innerhalb des vorgegebenen Bereichs 5 durch die interaktive Bedieneinheit 3 und Übermitteln der Stellung des ersten Verstellelements 11 an eine Recheneinheit 7 der Steuereinheit 1
- Ermitteln S3 von Gewichtungen für eine vorgegebene Kostenfunktion durch die Recheneinheit 7 abhängig von der vorgegebenen Stellung des ersten Verstellelements 11 relativ zum Bereich 5, wobei die Summe der Gewichtungen für alle Stellungen des Verstellelements konstant ist, und
- Ermitteln S4 eines oder mehrerer Parameter eines Steuerprogramms und/oder einer Regelung für den Robotermanipulator 100 auf Basis der Kostenfunktion mit den ermittelten Gewichtungen durch die Recheneinheit 7.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung, der durch die Ansprüche definiert wird, zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

Bezugszeichenliste

1 Steuereinheit
3 Bedieneinheit
5 Bereich
7 Recheneinheit
11 erstes Verstellelement
12 zweites Verstellelement
100 Robotermanipulator

S1 Anzeigen
S2 Erfassen
S3 Ermitteln
S4 Ermitteln

**Patentansprüche**

1. Steuereinheit (1) für einen Robotermanipulator (100), aufweisend eine interaktive Bedieneinheit (3), wobei die interaktive Bedieneinheit (3) zum Anzeigen eines ersten Verstellelements (11) und eines zweiten Verstellelements (12) und eines vorgegebenen Bereiches (5) für das erste Verstellelement (11) und für das zweite Verstellelement (12) ausgeführt ist, wobei das erste Verstellelement (11) und das zweite Verstellelement (12) innerhalb des Bereiches (5) durch eine Eingabe eines Anwenders an der interaktiven Bedieneinheit (3) verschiebbar sind, wobei die interaktive Bedieneinheit (3) zum Erfassen einer vom Anwender vorgegebenen Stellung der ersten Verstellelements (11) und des zweiten Verstellelements (12) innerhalb des vorgegebenen Bereichs (5) und zum Übermitteln der Stellung des ersten Verstellelements (11) und des zweiten Verstellelements (12) an eine Recheneinheit (7) der Steuereinheit (1) ausgeführt ist, wobei das erste Verstellelement (11) und das zweite Verstellelement (12) auf einer gemeinsamen linearen Skala verschiebbar sind, wobei die Recheneinheit (7) dazu ausgeführt ist, abhängig von der relativen Stellung des ersten Verstellelements (11) zum zweiten Verstellelement (12) und abhängig von der relativen Stellung des jeweiligen Verstellelements (11,12) relativ zum Bereich (5) zumindest drei Gewichtungen für eine vorgegebene Kostenfunktion zu ermitteln, wobei die Summe der Gewichtungen für alle Stellungen des ersten Verstellelements (11) konstant ist, und wobei die Recheneinheit (7) dazu ausgeführt ist, auf Basis der Kostenfunktion mit den ermittelten Gewichtungen einen oder mehrere Parameter eines Steuerprogramms und/oder einer Regelung für den Robotermanipulator (100) zu ermitteln.

2. Steuereinheit (1) nach Anspruch 1,
wobei die Recheneinheit (7) dazu ausgeführt ist, auf Basis der Kostenfunktion mit den ermittelten Gewichtungen den einen oder mehrere Parameter des Steuerprogramms und/oder der Regelung für den Robotermanipulator (100) durch wiederholt angepasstes und lernendes Ausführen einer Aufgabe zu ermitteln.

3. Steuereinheit (1) nach einem der vorhergehenden Ansprüche,
wobei die Recheneinheit (7) dazu ausgeführt ist, den einen oder die Parameter des Steuerprogramms und/oder der Regelung für den Robotermanipulator (100) durch Minimierung des Funktionswertes der Kostenfunktion mit den ermittelten Gewichtungen zu ermitteln.

4. Steuereinheit (1) nach einem der vorhergehenden Ansprüche,
wobei die Kostenfunktion mindestens eine der folgenden Variablen aufweist:

- benötigte Zeit zum Ausführen einer Aufgabe durch den Robotermanipulator (100),
- benötigter Energieverbrauch zum Ausführen der Aufgabe,

- Abnutzung des Robotermanipulators (100) und/oder eines Werkstücks beim Ausführen der Aufgabe,
- Kräfte und/oder Momente, die zwischen einem Endeffektor des Robotermanipulators (100) und einem Objekt aus der Umgebung des Robotermanipulators (100) wirken,
- Momente, die in den Gelenken des Robotermanipulators (100) beim Ausführen der Aufgabe auftreten,
- Geschwindigkeiten eines Referenzpunktes des Robotermanipulators (100), die beim Ausführen der Aufgabe auftreten,
- Beschleunigungen des Referenzpunktes des Robotermanipulators (100), die beim Ausführen der Aufgabe auftreten,
- Geräuschentwicklung, die beim Ausführen der Aufgabe auftritt.

5. Steuereinheit (1) nach einem der Ansprüche 1 bis 4,
wobei das erste Verstellelement (11) auf einer linearen Skala verschiebbar ist, wobei die Recheneinheit (7) dazu ausgeführt ist, abhängig von der vorgegebenen Stellung des ersten Verstellelements (11) relativ zum Bereich (5) mindestens zwei Gewichtungen für die vorgegebene Kostenfunktion zu ermitteln.

6. Steuereinheit (1) nach einem der Ansprüche 1 bis 4,
wobei der vorgegebene Bereich (5) eine begrenzte Ebene umfasst, wobei das erste Verstellelement (11) in der begrenzten Ebene verschiebbar ist, wobei die Recheneinheit (7) dazu ausgeführt ist, abhängig von der vorgegebenen Stellung des ersten Verstellelements (11) relativ zum Bereich (5) mindestens drei Gewichtungen für die vorgegebene Kostenfunktion zu ermitteln.

7. Steuereinheit (1) nach Anspruch 6,
wobei die begrenzte Ebene ein Vieleck ist, wobei jede der Ecken des Vielecks jeweils einer Variablen der vorgegebenen Kostenfunktion zugeordnet ist, wobei ein jeweiliger Abstand des ersten Verstellelements (11) jeweils gegenüber einer Ecke des Vielecks gemäß der vorgegebenen Stellung des ersten Verstellelements (11) das Verhältnis zwischen den jeweiligen Gewichtungen bestimmt.

8. Verfahren zum Ermitteln eines oder mehrerer Parameter eines Steuerprogramms und/oder einer Regelung für einen Robotermanipulator (100) durch eine Steuereinheit (1), aufweisend die Schritte:

   - Anzeigen (S1) eines ersten Verstellelements (11) und eines zweiten Verstellelements (12) und eines vorgegebenen Bereiches (5) für das erste Verstellelement (11) und für das zweite Verstellelement (12) durch eine interaktive Bedieneinheit (3), wobei das erste Verstellelement (11) und das zweite Verstellelement (12) innerhalb des Bereiches (5) durch eine Eingabe eines Anwenders an der interaktiven Bedieneinheit (3) verschiebbar sind, wobei das erste Verstellelement (11) und das zweite Verstellelement (12) auf einer gemeinsamen linearen Skala verschiebbar sind,
   - Erfassen (S2) einer vom Anwender vorgegebenen Stellung des ersten Verstellelements (11) und des zweiten Verstellelements (12) innerhalb des vorgegebenen Bereichs (5) durch die interaktive Bedieneinheit (3) und Übermitteln der Stellung des ersten Verstellelements (11) und des zweiten Verstellelements (12) an eine Recheneinheit (7) der Steuereinheit (1),
   - Ermitteln (S3) von zumindest drei Gewichtungen für eine vorgegebene Kostenfunktion durch die Recheneinheit (7) abhängig von der relativen Stellung des ersten Verstellelements (11) zum zweiten Verstellelement (12) und abhängig von der relativen Stellung des jeweiligen Verstellelements (11,12) relativ zum Bereich (5), wobei die Summe der Gewichtungen für alle Stellungen des ersten Verstellelements (11) konstant ist, und
   - Ermitteln (S4) eines oder mehrerer Parameter eines Steuerprogramms und/oder einer Regelung für den Robotermanipulator (100) auf Basis der Kostenfunktion mit den ermittelten Gewichtungen durch die Recheneinheit (7).

**Claims**

1. Control unit (1) for a robot manipulator (100), having an interactive operating unit (3), wherein the interactive operating unit (3) is designed for displaying a first adjustment element (11) and a second adjustment element (12) and a specified region (5) for the first adjustment element (11) and for the second adjustment element (12), wherein the first adjustment element (11) and the second adjustment element (12) can be moved within the region (5) by means of an input of a user on the interactive operating unit (3), wherein the interactive operating unit (3) is designed for detecting a user-specified position of the first adjustment element (11) and of the second adjustment element (12) within the specified region (5) and for transmitting the position of the first adjustment element (11) and of the second adjustment element (12) to a computing unit (7) of the control unit (1), wherein the first adjustment element (11) and the second adjustment element (12) can be moved on a common linear scale, wherein the computing unit (7) is designed for ascertaining at least three weightings for a specified cost function as a function of the position of the first adjustment element (11) relative to the second adjustment element (12) and as a function of the position of the relevant adjustment element (11, 12) relative to the region (5), wherein the sum of the weightings is constant for all the positions of the first adjustment element (11), and wherein the computing unit (7) is designed for ascertaining one or more parameters of a control program and/or of a control system for the robot manipulator (100) on the basis of the cost function with the ascertained weightings.

2. Control unit (1) according to claim 1,
wherein the computing unit (7) is designed for ascertaining, on the basis of the cost function with the ascertained weightings, the one or more parameters of the control program and/or of the control system for the robot manipulator (100) by repeated adapted and learning-based performance of a task.

3. Control unit (1) according to either of the preceding claims,
wherein the computing unit (7) is designed for ascertaining the one parameter or the parameters of the control program and/or of the control system for the robot manipulator (100) by minimizing the function value of the cost function with the ascertained weightings.

4. Control unit (1) according to any of the preceding claims, wherein the cost function has at least one of the following variables:

- time necessary for the robot manipulator (100) to perform a task,
- energy consumption necessary for performing the task, - wear of the robot manipulator (100) and/or of a workpiece during the performance of the task,
- forces and/or torques which act between an end effector of the robot manipulator (100) and an object from the environment of the robot manipulator (100),
- torques which occur in the joints of the robot manipulator (100) during the performance of the task,
- speeds of a reference point of the robot manipulator (100) which occur during the performance of the task,
- accelerations of the reference point of the robot manipulator (100) which occur during the performance of the task,
- noise which occurs during the performance of the task.

5. Control unit (1) according to any of claims 1 to 4,
wherein the first adjustment element (11) can be moved on a linear scale, wherein the computing unit (7) is designed for ascertaining at least two weightings for the specified cost function as a function of the specified position of the first adjustment element (11) relative to the region (5).

6. Control unit (1) according to any of claims 1 to 4,
wherein the specified region (5) includes a limited plane, wherein the first adjustment element (11) can be moved in the limited plane, wherein the computing unit (7) is designed for ascertaining at least three weightings for the specified cost function as a function of the specified position of the first adjustment element (11) relative to the region (5).

7. Control unit (1) according to claim 6,
wherein the limited plane is a polygon, wherein each of the vertices of the polygon is associated with a variable of the specified cost function, wherein a relevant distance of the first adjustment element (11) with respect to a relevant vertex of the polygon determines the ratio between the respective weightings in accordance with the specified position of the first adjustment element (11).

8. Method for ascertaining one or more parameters of a control program and/or of a control system for a robot manipulator (100) by means of a control unit (1), the method having the steps of:

- displaying (S1) a first adjustment element (11) and a second adjustment element (12) and a specified region (5) for the first adjustment element (11) and for the second adjustment element (12) by means of an interactive operating unit (3), wherein the first adjustment element (11) and the second adjustment element (12) can be moved within the region (5) by means of an input of a user on the interactive operating unit (3), wherein the first adjustment element (11) and the second adjustment element (12) can be moved on a common linear scale,

- detecting (S2) a user-specified position of the first adjustment element (11) and of the second adjustment element (12) within the specified region (5) by means of the interactive operating unit (3) and transmitting the position of the first adjustment element (11) and of the second adjustment element (12) to a computing unit (7) of the control unit (1),
- ascertaining (S3) at least three weightings for a specified cost function by means of the computing unit (7) as a function of the position of the first adjustment element (11) relative to the second adjustment element (12) and as a function of the position of the relevant adjustment element (11, 12) relative to the region (5), wherein the sum of the weightings is constant for all the positions of the first adjustment element (11), and
- ascertaining (S4) one or more parameters of a control program and/or of a control system for the robot manipulator (100) on the basis of the cost function with the ascertained weightings by means of the control unit (7).

**Revendications**

1. Unité de commande (1) pour un manipulateur robotique (100), présentant une unité de manoeuvre interactive (3), dans laquelle l'unité de manoeuvre interactive (3) est configurée pour l'affichage d'un premier élément de réglage (11) et d'un second élément de réglage (12) et d'une zone (5) prédéfinie pour le premier élément de réglage (11) et pour le second élément de réglage (12), dans laquelle le premier élément de réglage (11) et le second élément de réglage (12) peuvent être déplacés à l'intérieur de la zone (5) par une entrée d'un utilisateur sur l'unité de manoeuvre interactive (3), dans laquelle l'unité de manoeuvre interactive (3) est configurée pour la détection d'une position prédéfinie par l'utilisateur du premier élément de réglage (11) et du second élément de réglage (12) à l'intérieur de la zone (5) prédéfinie et pour la transmission de la position du premier élément de réglage (11) et du second élément de réglage (12) à une unité de calcul (7) de l'unité de commande (1), dans laquelle le premier élément de réglage (11) et le second élément de réglage (12) peuvent être déplacés sur une échelle linéaire commune, dans laquelle l'unité de calcul (7) est configurée pour déterminer, en fonction de la position relative du premier élément de réglage (11) par rapport au second élément de réglage (12) et en fonction de la position relative de l'élément de réglage (11,12) respectif par rapport à la zone (5), au moins trois pondérations pour une fonction de coût prédéfinie, dans laquelle la somme des pondérations pour toutes les positions du premier élément de réglage (11) est constante, et dans laquelle l'unité de calcul (7) est configurée pour déterminer, sur la base de la fonction de coût avec les pondérations déterminées, un ou plusieurs paramètres d'un programme de commande et/ou d'une régulation pour le manipulateur robotique (100).

2. Unité de commande (1) selon la revendication 1, dans laquelle l'unité de calcul (7) est configurée pour déterminer, sur la base de la fonction de coût avec les pondérations déterminées, le ou les paramètres du programme de commande et/ou de la régulation pour le manipulateur robotique (100) en réalisant à plusieurs reprises une tâche de manière adaptée et avec apprentissage.

3. Unité de commande (1) selon l'une des revendications précédentes, dans laquelle l'unité de calcul (7) est configurée pour déterminer le ou les paramètres du programme de commande et/ou de la régulation pour le manipulateur robotique (100) en minimisant la valeur de fonction de la fonction de coût avec les pondérations déterminées.

4. Unité de commande (1) selon l'une des revendications précédentes, dans laquelle la fonction de coût présente au moins l'une des variables suivantes :

  - le temps nécessaire à la réalisation d'une tâche par le manipulateur robotique (100),
  - la consommation d'énergie nécessaire pour la réalisation de la tâche,
  - l'usure du manipulateur robotique (100) et/ou d'une pièce lors de la réalisation de la tâche,
  - des forces et/ou des couples qui agissent entre un effecteur terminal du manipulateur robotique (100) et un objet provenant de l'environnement du manipulateur robotique (100),
  - des couples qui se produisent dans les articulations du manipulateur robotique (100) lors de la réalisation de la tâche,
  - des vitesses d'un point de référence du manipulateur robotique (100) qui se produisent lors de la réalisation de la tâche,
  - des accélérations du point de référence du manipulateur robotique (100) qui se produisent lors de la réalisation de la tâche,
  - une génération de bruit qui se produit lors de la réalisation de la tâche.

5. Unité de commande (1) selon l'une des revendications 1 à 4, dans laquelle le premier élément de réglage (11) peut être déplacé sur une échelle linéaire, dans laquelle l'unité de calcul (7) est configurée pour déterminer, en fonction de la position prédéfinie du premier élément de réglage (11) par rapport à la zone (5), au moins deux pondérations pour la fonction de coût prédéfinie.

6. Unité de commande (1) selon l'une des revendications 1 à 4, dans laquelle la zone (5) prédéfinie comprend un plan limité, dans laquelle le premier élément de réglage (11) peut être déplacé dans le plan limité, dans laquelle l'unité de calcul (7) est configurée pour déterminer, en fonction de la position prédéfinie du premier élément de réglage (11) par rapport à la zone (5), au moins trois pondérations pour la fonction de coût prédéfinie.

7. Unité de commande (1) selon la revendication 6,
dans laquelle le plan limité est un polygone, dans laquelle chacun des coins du polygone est associé à respectivement une variable de la fonction de coût prédéfinie, dans laquelle une distance respective du premier élément de réglage (11) par rapport à respectivement un coin du polygone spécifie le rapport entre les pondérations respectives conformément à la position prédéfinie du premier élément de réglage (11).

8. Procédé permettant de déterminer un ou plusieurs paramètres d'un programme de commande et/ou d'une régulation pour un manipulateur robotique (100) par une unité de commande (1), présentant les étapes suivantes :

- affichage (S1) d'un premier élément de réglage (11) et d'un second élément de réglage (12) et d'une zone (5) prédéfinie pour le premier élément de réglage (11) et pour le second élément de réglage (12) par une unité de manoeuvre interactive (3), dans lequel le premier élément de réglage (11) et le second élément de réglage (12) peuvent être déplacés à l'intérieur de la zone (5) par une entrée d'un utilisateur sur l'unité de manoeuvre interactive (3), dans lequel le premier élément de réglage (11) et le second élément de réglage (12) peuvent être déplacés sur une échelle linéaire commune,
- détection (S2) d'une position prédéfinie par l'utilisateur du premier élément de réglage (11) et du second élément de réglage (12) à l'intérieur de la zone (5) prédéfinie par l'unité de manoeuvre interactive (3) et transmission de la position du premier élément de réglage (11) et du second élément de réglage (12) à une unité de calcul (7) de l'unité de commande (1),
- détermination (S3) d'au moins trois pondérations pour une fonction de coût prédéfinie par l'unité de calcul (7) en fonction de la position relative du premier élément de réglage (11) par rapport au second élément de réglage (12) et en fonction de la position relative de l'élément de réglage (11,12) respectif par rapport à la zone (5), dans lequel la somme des pondérations est constante pour toutes les positions du premier élément de réglage (11), et
- détermination (S4) d'un ou de plusieurs paramètres d'un programme de commande et/ou d'une régulation pour le manipulateur robotique (100) sur la base de la fonction de coût avec les pondérations déterminées par l'unité de calcul (7).

Fig. 1

Fig. 2

G(x1)  G(x2)  G(x3)

Fig. 3

1/ G(X4)

X4

Fig. 4

| S1 |
|----|
| S2 |
| S3 |
| S4 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Design and Evaluation of Adverb Palette: A GUI for Selecting Tradeoffs in Multi-Objective Optimization Problems. **SHAIKH MEHER T et al.** 12TH ACM/IEEE INTERNATIONAL CONFERENCE ON HUMAN-ROBOT INTERACTION (HRI). ACM, 06. Marz 2017, 389-397